# EUROPÄISCHE PATENTSCHRIFT

(11) **EP 2 801 491 B1**
(45) Veröffentlichungstag und Bekanntmachung des Hinweises auf die Patenterteilung: **17.06.2015**
(21) Anmeldenummer: 14161979.1
(22) Anmeldetag: 27.03.2014
(51) Int. Cl.: B60G 11/08, B60G 11/10

(54) **Querblattfedersystem für ein Kraftfahrzeug**
Transverse spring leaf system for a motor vehicle
Système de suspension à ressort à lame transversal pour un véhicule automobile

(30) Priorität: 06.05.2013 DE 102013104618
(43) Veröffentlichungstag der Anmeldung: 12.11.2014
(73) Patentinhaber: Benteler Automobiltechnik GmbH, 33102 Paderborn (DE)
(72) Erfinder: Hummelt, Jürgen, 33100 Paderborn (DE); Schröder, Aloys, 33100 Paderborn (DE)
(74) Vertreter: Griepenstroh, Jörg

(56) Entgegenhaltungen:
- EP-A1- 1 378 382
- EP-A1- 1 645 445
- DE-A1-102008 049 761
- DE-A1-102009 028 899
- DE-U1-202013 103 900

## Beschreibung

Die Erfindung betrifft ein Querblattfedersystem für ein Kraftfahrzeug mit einer quer zum Kraftfahrzeug angeordneten Querblattfeder, welche über mindestens eine Lagereinheit mit dem Kraftfahrzeugaufbau verbunden ist, wobei die Lagereinheit ein Haltebauteil aufweist und die Querblattfeder im Haltebauteil zwischen elastischen Dämpferkörpern angeordnet ist.

Federn werden als Blattfedern zur Führung und Federung von Fahrzeugrädern verwendet. Eine Blattfeder besteht aus einem federnden Material wie Metall und/oder Kunststoff und/oder Verbundmaterialien und weist eine längliche, üblicherweise balkenförmige Form auf mit einem Mittelbereich und zumindest zwei Enden.

Als sogenannte Querblattfeder ist die Blattfeder horizontal liegend quer zur Fahrzeuglängsachse angeordnet. Im mittleren Bereich ist die Querblattfeder über in der Regel zwei Lagereinheiten mit dem Kraftfahrzeugaufbau verbunden bzw. an diesem gehalten. Auf diese Weise können die beiden Enden eine im Wesentlichen vertikale Federbewegung ausführen. Über endseitige Lager an den Enden der Querblattfeder steht diese mit Radträgern oder mit einer weiteren Komponente der Radaufhängung in Wirkverbindung. Die Querblattfeder übernimmt radführende Funktionen, Lenkerfunktionen sowie dämpfende und lasttragende Aufgaben und kann in der herkömmlichen Radaufhängung notwendige Schraubenfedern und/oder auch Stabilisatoren ersetzen.

Aus der US 4,768,807 ist eine Radaufhängung mit einer Querblattfeder bekannt, welche die Radträger abstützt. Unter Eingliederung elastischer Dämpferkörper ist die Querblattfeder mit dem Fahrzeugrahmen verbunden. Die Querblattfeder ist im montierten Zustand von einem Haltebauteil umgriffen. Insgesamt erscheint die bekannte Ausführungsform aufwendig und wenig flexibel. Eine spezifische Fahrwerksauslegung ist nur durch individuelle Anpassung möglich.

Durch die DE 10 2009 028 574 A1 zählt eine Vorrichtung zum Lagern einer Querblattfeder eines Fahrzeugs an einem Fahrzeugaufbau zum Stand der Technik. Diese Vorrichtung weist einen Aufnahmebereich auf, von dem die Querblattfeder im montierten Zustand bereichsweise vollständig umgriffen ist. Die Vorrichtung umfasst zwei zylindrische Haltebereiche, die sich in Fahrzeuglängsrichtung jeweils an den Aufnahmebereichen anschließen und in Lagereinrichtungen mit hohlzylindrischen Lagerelementen eingreifen, die zumindest bereichsweise elastisch ausgebildet sind. Die Lagereinrichtungen sind fahrzeugaufbauseitig festlegbar. Nach dem dortigen Vorschlag sind zwei einstückig ausgebildete Halbschalenelemente vorgesehen, die jeweils einen Teil des Aufnahmebereiches und Teile der zylindrischen Haltebereiche umfassen.

Die DE 10 2010 060 093 A1 beschreibt ebenfalls eine Radaufhängung für ein Kraftfahrzeug mit einer Querblattfeder. Die Querblattfeder ist über mindestens zwei Lager bzw. Lagereinheiten mit dem Kraftfahrzeugaufbau und an ihren beiden voneinander abgewandten Enden jeweils gelenkig mit einem Radträger verbunden. Die Lagereinheiten sind so ausgebildet, dass die Querblattfeder in Richtung der Fahrzeughochachse steif fixiert ist, in Richtung der Fahrzeugquerachse jedoch translatorisch um eine parallel zur Fahrzeuglängsachse gerichtete Achse rotierbar bewegbar ist. Auf diese Weise kann die Querblattfeder so am Fahrzeugaufbau gelagert werden, dass das Verhältnis von Wankfederrate zu Hubfederrate so einstellbar ist, dass ein Einbau eines Querstabilisators zur Stabilisierung des Fahrzeugs unnötig ist.

Des Weiteren zählt eine Blattfederaufhängung gemäß der EP 1 645 445 A1 zum Stand der Technik. Die Radaufhängung weist eine quer zum Kraftfahrzeug angeordnete Blattfeder auf, die einen Mittelbereich und zwei einander gegenüberliegende Endbereiche besitzt. Die Endbereiche sind jeweils in einem Blattfederlager aufgenommen, die jeweils mit dem Fahrzeugaufbau verbunden sind. An ihren Endbereichen weist die Blattfeder an ihren gegenüberliegenden Oberflächen jeweils eine Einbuchtung auf. Ferner besitzen die Blattfederlager innere, halbrunde Elemente, die an einer zur Blattfeder weisenden Anlagefläche zu den jeweiligen Einbuchtungen korrespondierende Buckel aufweisen. Die inneren, halbrunden Elemente sind vollumfänglich von einem elastischen Material umfasst.

Ähnlich aufgebaute Radaufhängungen bzw. Lagervorrichtungen für eine Querblattfeder gehen aus der EP 1 378 382 A1 und der DE, 10 2009 028 899 A1 hervor.

Durch die DE 10 2008 049 761 A1 zählt des Weiteren eine Einzelradaufhängung für ein Fahrzeugrad und eine damit ausgerüstete Radachse zum Stand der Technik. Diese offenbart ein Querblattfedersystem für ein Kraftfahrzeug mit einer quer zum Kraftfahrzeug angeordneten Querblattfeder, welche über mindestens eine Lagereinheit mit dem Kraftfahrzeugaufbau verbunden ist, wobei die Lagereinheit ein Haltebauteil in. Form von Rahmenschalen aufweist und die Querblattfeder im Haltebauteil zwischen elastischen Dämpfungskörpern, insbesondere Gummikissen, angeordnet ist. Weiterhin ist ein Abstandshalter vorgesehen, der so konfiguriert ist, dass er zur Querblattfeder passt und die Querblattfeder zusammen mit dem Abstandshalter in die Lagereinheit einbaubar ist.

Durch den Einsatz von radführenden Querblattfedern können bislang notwendige Stabilisatoren einschließlich deren Lagerungen ebenso wie Pendelstützen, Querlenker und konventionelle Schraubenfedern wegfallen. Dies führt zu einem reduzierten Bauteil- und Montageaufwand. Jedoch sind je nach Steifigkeitsanforderungen, bestimmt durch Fahrzeuggewicht, Fahrzeugkomfort, Fahrzeugdynamik und/oder Fahrwerksabstimmung etc. verschiedene Querblattfedern notwendig mit entsprechenden Steifigkeitsraten, die eine unterschiedliche Querschnittsgeometrie besitzen. Dies hat zur Folge, dass innerhalb einer Fahrzeugserie der Querschnitt der Querblattfedern, die zum Einsatz kommen, variiert. Die Einbausituation der Blattfeder im Fahrwerk ist jedoch gleich. Demzufolge sind Anpassungsmaßnahmen für jeden Querblattfedertyp notwendig, um die Geometrieunterschiede auszugleichen, was jedoch aufwendig und unvorteilhaft ist.

Der Erfindung liegt die Aufgabe zugrunde, ein verbessertes Querblattfedersystem bereitzustellen, welches es ermöglicht, bei gleicher Einbausituation in einer Fahrzeugserie bzw. -baureihe, verschiedene Querblattfedern mit unterschiedlicher Querschnittsgeometrie rationell einzupassen.

Zwei eigenständige Lösungen dieser Aufgabe zeigen die Ansprüche 1 und 2 auf.

Das erfindungsgemäße Querblattfedersystem für ein Kraftfahrzeug weist eine quer zum Kraftfahrzeug angeordnete Querblattfeder auf. Diese ist über mindestens eine Lagereinheit, in der Regel zwei Lagereinheiten, im mittleren Bereich ihrer Längserstreckung mit dem Kraftfahrzeugaufbau verbunden. Die Lagereinheit weist ein Haltebauteil auf. Üblicherweise umgreift das Haltebauteil die Querblattfeder zumindest bereichsweise. Im Haltebauteil ist die Querblattfeder zwischen elastischen Dämpferkörpern angeordnet, wobei die Querblattfeder im Haltebauteil unter Eingliederung eines Adapters aufgenommen ist, und wobei der Adapter einen auf die Querschnittsgeometrie der Querblattfeder angepassten Innenraum aufweist.

Gemäß Anspruch 1 besitzt der Adapter Verbindungsmittel zur Kopplung mit den Dämpfungskörpern.

Außenseitig am Adapter sind Verbindungsmittel vorgesehen zur Kopplung des Adapters mit dem oder den Dämpferkörpern. Hierzu wirken die Verbindungsmittel mit Widerlagern am Dämpferkörper zusammen.

Gemäß Anspruch 2 umfasst das Querblattfedersystem einen Satz von Querblattfedern und einen Satz von Adaptern, wobei die einzelnen Querblattfedern zumindest in einem Längenabschnitt jeweils eine voneinander verschiedene Querschnittsgeometrie besitzen. Die einzelnen Adapter sind so konfiguriert, dass jeweils ein Adapter zu der Querschnittskonfiguration einer Querblattfeder passt und die Querblattfeder zusammen mit dem Adapter in die Federlagereinheit einbaubar ist und mittels der Lagereinheit am Kraftfahrzeugaufbau angelenkt werden kann.

Zweckmäßigerweise weisen alle Adapter eine gleichgestaltete Außenkonfiguration auf, wohingegen jeder einzelne Adapter einen auf die jeweilige Querschnittsgeometrie eines bestimmten Typs einer Querblattfeder abgestimmten Innenraum besitzt, in welchem die Querblattfeder mit einem Längenabschnitt im Lagerungsbereich aufgenommen wird.

Der technologische Zusammenhang der beiden eigenständigen Lösungen besteht in der Integration von verschiedenen Querblattfedern bzw. Querblattfeder-Typen mit unterschiedlicher Querschnittsgeometrie in eine bauraumbedingte, unveränderbare Einbausituation eines Kraftfahrzeugs unter Nutzung eines Adapters. Es können unterschiedliche Typen von Querblattfedern eingebaut werden, ohne die äußeren Anbindungspunkte über die Lagereinheit, zur Lagereinheit gehörende Haltebauteile oder weitere Lagerkomponenten zu verändern.

Vorteilhafte Ausgestaltungen des erfindungsgemäßen Querblattfedersystems sind Gegenstand der abhängigen Ansprüche.

Erfindungsgemäß wird der Bauraum für die Querblattfeder in der Lagereinheit nach der maximalen Querschnittsgeometrie der Querblattfeder gestaltet bzw. nach der Querblattfeder, welcher die maximale Querschnittsgeometrie besitzt. Je nach einzusetzender Querblattfeder, die in Abhängigkeit von den fahrzeugspezifischen Anforderungen wie Fahrzeuggewicht, Fahrkomfort, Fahrdynamik und Fahrwerksabstimmung etc. ausgewählt wird, kommt ein auf die Querschnittsgeometrie der jeweiligen Querblattfeder abgestimmter Adapter zum Einsatz. Eingegliedert im Adapter wird die Querblattfeder in der Lagereinheit zusammen mit den elastischen Dämpferkörpern verbaut.

Bei dem erfindungsgemäßen Querblattfedersystem kann es sich sowohl um ein radführendes Querblattfedersystem als auch um ein nicht radführendes Querblattfedersystem handeln. Die Querblattfeder kann radführende Funktionen übernehmen. Weiterhin kann die Querblattfeder nicht radführend sein und am Ende mit den Lenkern verbunden sein. Hierdurch kann der Stabilisator wegfallen.

Eine besonders vorteilhafte Ausgestaltung sieht vor, dass der Adapter zwei miteinander verbindbare Adapterteile umfasst, insbesondere ein Adapteroberteil und ein Adapterunterteil. Die Adapterteile sind kraft- und/oder formschlüssig mittels Koppelelementen verbindbar. Vorzugsweise kommen Koppelelemente in Form von Clipelementen, Federelementen oder Rastelementen zum Einsatz.

Die Außenkontur der beiden Adapterteile passt genau in die Innenkontur der Lagereinheit bzw. des Haltebauteils der Federlagereinheit. Auf diese Weise kann die Querblattfeder zusammen mit dem Adapter ohne Probleme genau in die vorbereitete Lagervorrichtung eingepasst und in der Lagereinheit montiert werden.

Wie erwähnt, werden die beiden Adapterteile formschlüssig, beispielsweise durch Clips, miteinander verbunden, wodurch die Vormontage des Adapters an der Querblattfeder vereinfacht wird. Nach der Vormontage wird die Querblattfeder zusammen mit dem Adapter in einer Lagereinheit eingebaut. Üblicherweise umfasst die Lagervorrichtung für die Querblattfeder innerhalb des Querblattfedersystems zwei Lagereinheiten.

Der Adapter ist bevorzugt aus Kunststoff, z. B. Polyamid. Der Adapter bzw. die Adapterteile können auch aus faserverstärktem Kunststoff bestehen. Der Werkstoff bzw. die Elastizität des Werkstoffs muss die federklemmende Verbindung der beiden Adapterteile untereinander gewährleisten. Insbesondere muss die Elastizität einer gewünschten Clipverbindung genügen. Die Elastizität des Werkstoffs des Adapters ist so gewählt, dass der Adapter keinen Einfluss auf die Performance der Querblattfeder und der Lagervorrichtung an sich hat und eine translatorische Bewegung der Querblattfeder in Fahrzeugquerrichtung erlaubt. Der Adapter muss lediglich der Funktion genügen, den Querschnitt einer Querblattfeder innerhalb der Lagereinheit zu kompensieren.

Zwischen dem Adapter und der Querblattfeder, ebenso wie zwischen dem Adapter und dem Haltebauteil, welches in der Regel durch einen Bügel realisiert ist, ist kein zusätzliches Verbindungselement notwendig. Das Haltebauteil der Federlagereinheit ist am Fahrzeugachsträger üblicherweise fest angeordnet. Zur Befestigung in der Fahrzeughochachse (z-Achse) wird der Adapter im Haltebauteil zwischen die Dämpferkörper gedrückt. Zur Befestigung der Fahrzeugquerachse (y-Achse) bewirken die Verbindungsmittel zur Kopplung des Adapters mit den Dämpferkörpern.

Eine praktisch vorteilhafte Ausgestaltung sieht vor, dass in die Dämpferkörper Stützplatten integriert sind, wobei die Verbindungsmittel mit freien Enden der Stützplatten koppelnd zusammenwirken. Über die Stützplatten wird die Verbindung zwischen den Dämpferkörpern und dem Adapter hergestellt. Gleichzeitig wirken die Stützplatten kraftübertragend und stoßdämpfend im Dämpferkörper. Zweckmäßigerweise bestehen die Stützplatten aus einem Kunststoff, einem Metall oder einem Verbundwerkstoff und sind in dem Dämpferkörper aus einem Elastomermaterial, beispielsweise einem Gummi, eingebettet.

Eine Variante der Erfindung sieht vor, dass der Adapter bzw. die Adapterteile stoffschlüssig mit den Dämpferkörpern gefügt sind. Vorzugsweise sind die Adapterteile direkt an die Dämpferkörper anvulkanisiert. In diesem Fall werden die Adapterteile untereinander zusammen mit den anvulkanisierten Dämpferkörpern jeweils über Koppelelemente, vorzugsweise Clip- bzw. Rastverbindungselemente, miteinander verbunden. Durch die einteilige Ausgestaltung von Dämpferkörper und Adapterteil können die Bauteile und die Vormontage noch mehr und weiter vereinfacht werden.

Die Funktion des Querblattfedersystems wird weiter verbessert, wenn der Adapter geometrisch auf Innenwandbereiche des Haltebauteils abgestimmte Seitenwandbereiche aufweist. Ebenso vorteilhaft ist, wenn der Adapter geometrisch auf Anlageflächen des Dämpferkörpers abgestimmte Aufnahmeflächen aufweist. Die vorstehenden Maßnahmen führen zu einer besonders vorteilhaften Bauteilgestaltung, unterstützen die Anbindung der Querblattfeder in der Federlagereinheit und tragen zu einer verbesserten Federungs- und Stabilisierungsfunktion des Querblattfedersystems bei.

Eine im Rahmen der Erfindung zum Einsatz gelangende Querblattfeder besteht bevorzugt aus glasfaserverstärktem Kunststoff.

Die Querblattfeder kann über die Federungs- und Stabilisierungsfunktionen hinaus auch die Radführung und damit wesentliche Aufgaben für die Spurstabilität und Fahrsicherheit eines Kraftfahrzeugs übernehmen. Wie bereits ausgeführt, muss die Querblattfeder im erfindungsgemäßen Querblattfedersystem jedoch nicht radführend sein. In diesem Fall ist die Querblattfeder nicht direkt mit den Radträgern oder anderen Radaufhängungskomponenten verbunden. Die Querblattfeder muss dann keine Querkraft von den Rädern aufnehmen. Die Lagerung in Fahrzeugquerrichtung muss dann nicht so steif sein. Hierdurch ist das Verhältnis von Wankfederrate zu Hubfederrate einstellbar.

Das erfindungsgemäße Querblattfedersystem schafft flexible Möglichkeiten für eine spezifische Fahrwerksauslegung durch den Fahrzeughersteller.

Weitere Vorteile und vorteilhafte Ausführungsformen des erfindungsgemäßen Querblattfedersystems ergeben sich aus den Patentansprüchen und dem nachfolgend anhand der Zeichnungen beschriebenen Ausführungsbeispielen. Es zeigen:
- Figur 1: in perspektivischer Darstellungsweise ein Querblattfedersystem mit einer Querblattfeder;
- Figur 2: einen vertikalen Querschnitt durch eine Lagereinheit des Querblattfedersystems konfiguriert zur Aufnahme eines ersten Querblattfedertyps;
- Figur 3: einen vertikalen Querschnitt durch eine Lagereinheit des Querblattfedersystems konfiguriert zur Aufnahme eines zweiten Querblattfedertyps;
- Figur 4: einen vertikalen Querschnitt durch eine Lagereinheit des Querblattfedersystems konfiguriert zur Aufnahme eines dritten Querblattfedertyps;
- Figur 5: einen vertikalen Querschnitt durch eine zweite Ausführungsform einer Lagereinheit des Querblattfedersystems konfiguriert zur Aufnahme eines vierten Querblattfedertyps;
- Figur 6: einen vertikalen Querschnitt durch die zweite Ausführungsform der Lagereinheit des Querblattfedersystems konfiguriert zur Aufnahme eines fünften Querblattfedertyps und
- Figur 7: einen vertikalen Querschnitt durch die zweite Ausführungsform der Lagereinheit des Querblattfedersystems konfiguriert zur Aufnahme eines sechsten Querblattfedertyps.

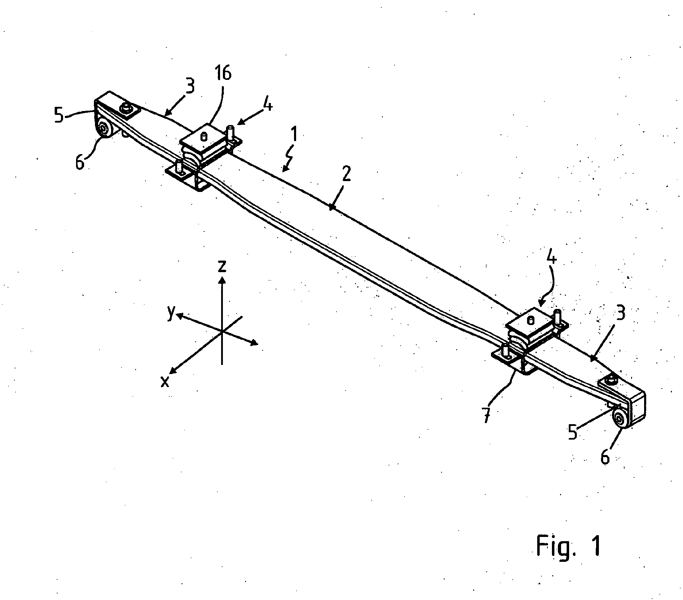

Figur 1 zeigt in perspektivischer Darstellung ein Querblattfedersystem für ein Kraftfahrzeug mit einer quer zum Kraftfahrzeug angeordneten Querblattfeder 1. Die Querblattfeder 1 besteht aus einem glasfaserverstärktem Kunststoff und weist einen Mittelbereich 2 und zwei gegenüberliegende Endbereiche 3 auf. Die Querblattfeder 1 ist über zwei symmetrisch zur Fahrzeuglängsachse (x-Achse) angeordnete Lagereinheiten 4 mit dem Kraftfahrzeugaufbau, beispielsweise mit der Karosserie oder mit einem Hilfsrahmen verbunden. An den freien Enden 5 der Endbereiche 3 sind Lager 6 vorgesehen. Über die Lager 6 erfolgt die Anbindung der Querblattfeder 1 mit einem Radträger oder mit einer weiteren Komponente der Radaufhängung.

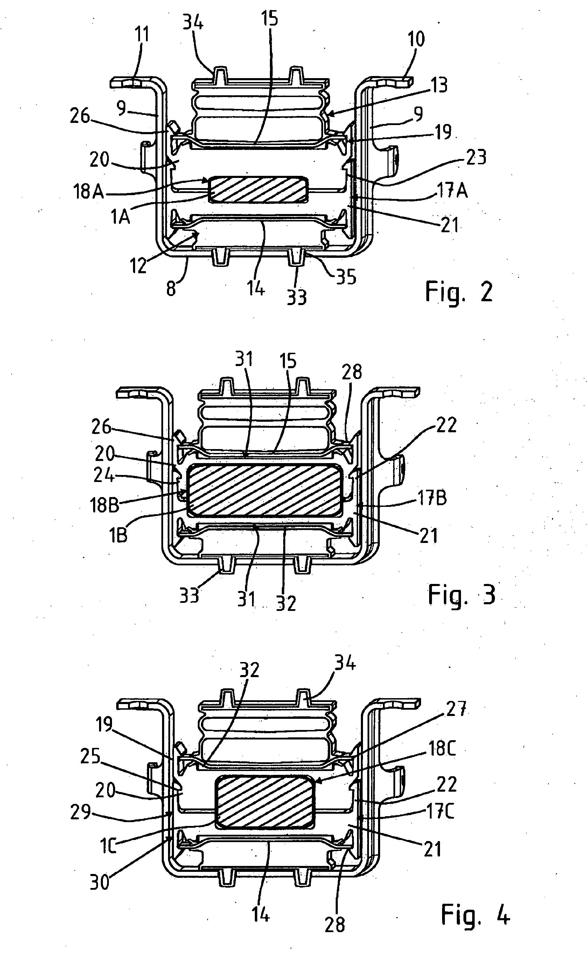

Eine Lagereinheit 4 umfasst im Wesentlichen ein Haltebauteil 7 in Form eines U-förmigen Bügels (siehe hierzu auch Figuren 2 bis 4). Das Haltebauteil 7 bzw. der Bügel weist einen Boden 8 mit zwei Seitenschenkeln 9 auf. Endseitig der Seitenschenkel 9 sind nach außen umgebogene Flanschabschnitte 10 ausgebildet. In den Flanschabschnitten 10 sind Bohrungen 11 vorgesehen, durch die beispielsweise Schrauben oder andere Befestigungsmittel durchsteckbar sind, über welche das Haltebauteil 7 am Fahrzeugaufbau festlegbar ist. Das Haltebauteil 7 umgreift dabei die Querblattfeder 1 von ihrer unteren Breitseite und den beiden Schmalseiten.

Im Haltebauteil 7 ist die Querblattfeder 1 zwischen einem ersten unteren Dämpferkörper 12 und einem zweiten oberen Dämpferkörper 13 angeordnet. Die Dämpferkörper 12, 13 sind vorzugsweise als Gummimetallteile ausgebildet und bestehen aus Gummi mit integrierten Stützplatten 14, 15 aus Metall. Oberseitig des oberen Dämpferkörpers 13 ist ein in der Figur 1 dargestelltes Klemmteil 16 vorgesehen.

Die Einbausituation einer Querblattfeder 1 im Kraftfahrzeug bzw. Fahrwerk ist bei einer Fahrzeugbaureihe gleich. Je nach Ausführung der Fahrzeuge benötigen diese jedoch steifere oder weichere Querblattfedern 1. Demzufolge fallen für eine Fahrzeugbaureihe Querblattfedern 1 mit unterschiedlichem Querschnitt an bzw. es müssen je nach Ausführung und Gewicht Querblattfedern 1 mit unterschiedlichem Querschnitt eingebaut werden.

Die Figuren 2, 3 und 4 zeigen jeweils einen Typ einer Querblattfedern 1A, 1B und 1C. Die Querblattfedern 1A - 1C besitzen in dem in der Lagereinheit 4 aufgenommenen Längenabschnitt einen unterschiedlichen Querschnitt. Der Querschnitt bzw. die Querschnittsgeometrie der Querblattfedern 1A, 1 B und 1C ist in den Figuren 2 bis 4 jeweils schraffiert dargestellt. Um die jeweils korrekte Radaufstandshöhe und die gewünschten Hub- und Wankraten darstellen zu können, kommen Adapter 17A, 17B, 17C zum Einsatz. Die Querblattfeder 1A - 1C ist im Haltebauteil 7 unter Eingliederung eines Adapters 17A - 17C aufgenommen. Im hier dargestellten Ausführungsbeispiel steht für den Satz der drei Querblattfedern 1A, 1 B, 1C ein Satz von drei Adaptern 17A, 17B, 17C zur Verfügung. Die Adapter 17A - 17C weisen jeweils einen auf die Querschnittsgeometrie der Querblattfeder 1A - 1C angepassten Innenraum 18A, 18B, 18C auf. Im Innenraum 18A - 18C ist die Querblattfeder 1A - 1C formschlüssig aufgenommen. Die Adapter 17A - 17C weisen Verbindungsmittel 19 zur Kopplung mit den Dämpferkörpern 12, 13 auf.

Wie in den Figuren 2 bis 4 zu erkennen, bestehen die Adapter 17A - 17C jeweils aus zwei miteinander verbindbaren Adapterteilen, nämlich einem Adapteroberteil 20 und einem Adapterunterteil 21. Adapteroberteil 20 und Adapterunterteil 21 sind kraft- und formschlüssig miteinander verbunden. Hierzu sind am Adapteroberteil 20 und am Adapterunterteil 21 Koppelelemente in Form von Clip- bzw. Rastkörpern 22, 23 vorgesehen mit Hinterschneidungen 24 und Widerlagerflächen 25, die im gekoppelten Zustand der Adapterteile 20, 21 miteinander federelastisch rastend in Eingriff gelangen bzw. stehen.

Die Verbindungsmittel 19 des Adapters 17A - 17C am Adapteroberteil 20 und am Adapterunterteil 21, über welche die Verbindung zu den Dämpferkörpern 12, 13 hergestellt wird, sind ebenfalls durch Clip- bzw. Rastkörper 26 ausgebildet. Diese Rastkörper 26 sind zungen- oder laschenförmig ausgebildet und stehen nach oben bzw. unten in Richtung zu den Dämpferkörpern 12, 13 vor. Die Rastkörper 26 weisen Hinterschneidungen 27 auf, die mit Widerlagern 28 an den Dämpferkörpern 12, 13 zusammenwirken. Die Widerlager 28 sind von den freien Enden 29 der Stützplatten 14, 15 gebildet, die gegenüber den Dämpferkörpern 12, 13 vorstehen und mit den Verbindungsmitteln 19 koppelnd zusammenwirken.

Zusammen mit jeweils einem Adapter 17A - 17C ist jeweils eine Querblattfeder 1A - 1C im Haltebauteil 7 aufgenommen. Die Adapter 17A - 17C weisen geometrisch auf Innenwandbereiche 29 des Haltebauteils 7 abgestimmte Seitenwandbereiche 30 auf. Man erkennt, dass die Seitenwandbereiche 30 sich an die Innenwandbereiche 29 der Seitenschenkel 9 des Haltebauteils 7 anlegen. Ferner sind am Adapteroberteil 20 und am Adapterunterteil 21 Aufnahmeflächen 31 vorgesehen. Die Aufnahmeflächen 31 sind geometrisch auf Anlageflächen 32 der Dämpferkörper 12, 13 abgestimmt. Hierdurch ergibt sich eine formschlüssige, stabile und zuverlässige kraftübertragende Verbindung zwischen den Dämpferkörpern 12, 13 und dem Adapter 17A - 17C bzw. den Adapterteilen 20, 21.

An den Dämpferkörpern 12, 13 sind ferner noch vertikal abstehende Zapfen 33, 34 vorgesehen. Die Zapfen 33 am unteren Dämpferkörper 12 kommen in Durchbrechungen 35 im Boden 8 des Haltebauteils 7 zum Eingriff. Die Zapfen 34 des Adapteroberteils 20 durchragen Öffnungen eines in den Figuren 2 bis 4 nicht dargestellten oberen Klemmbauteils.

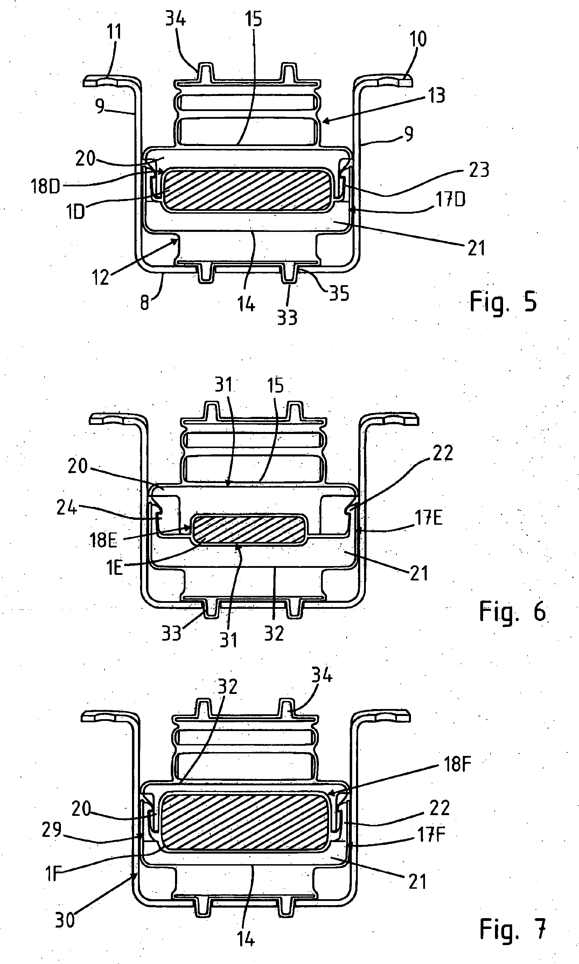

Die Figuren 5, 6 und 7 zeigen ebenfalls eine Lagereinheit 4, in welcher jeweils ein Typ einer Querblattfeder 1D, 1 E, 1 F über ein Haltebauteil 7 aufgenommen ist. Die Querblattfedern 1D - 1F besitzen in dem in der Lagereinheit 4 aufgenommenen Längenabschnitt einen unterschiedlichen Querschnitt, der schraffiert dargestellt ist. Die grundsätzlichen Funktionen entsprechen der zuvor beschriebenen Lagereinheit, so dass die Bauteile bzw. Bauteilkomponenten in den Figuren 5 bis 7 mit den gleichen Bezugszeichen versehen sind. Auf eine nochmalige detaillierte Beschreibung wird zur Vermeidung von Wiederholungen verzichtet.

Die Querblattfedern 1D - 1 F sind jeweils im Haltebauteil 7 unter Eingliederung eines Adapters 17D - 17F aufgenommen. Der wesentliche Unterschied zu den zuvor beschriebenen Ausführungsformen besteht darin, dass jeweils das Adapteroberteil und das Adapterunterteil stoffschlüssig mit den Dämpferkörpern 12, 13 gefügt sind. Das Adapteroberteil 20 ist an die Unterseite des oberen Dämpferkörpers 13 anvulkanisiert. Das Adapterunterteil 21 ist an die Oberseite des unteren Dämpferkörpers 12 anvulkanisiert. Auf diese Weise bilden Adapteroberteil 20 und oberer Dämpferkörper 13 sowie Adapterunterteil 21 und unterer Dämpferkörper 13 eine Einheit. Die Verbindung von Adapteroberteil 20 und Adapterunterteil 21 erfolgt unter Eingliederung jeweils der Querblattfeder 1D - 1 F über kraft- und formschlüssig miteinander verbindbare Koppelelemente in Form von Clip- bzw. Rastkörpern 22, 23.

Das erfindungsgemäße Querblattfedersystem ermöglicht es, bei gleicher Einbausituation in einer Fahrzeugserie bzw. -baureihe verschiedene Querblattfedern 1A - 1C, 1D - 1F mit unterschiedlicher Querschnittsgeometrie rational in eine Lagereinheit 4 einzupassen unter Gewährleistung der korrekten Radaufstandshöhe und der geforderten Hub- und Wankraten. Hierzu wird ein Satz von Querblattfedern 1A- 1C bzw. 1D - 1 F und ein Satz Adaptern 17A - 17C; 17D - 17F bereitgestellt. Die Adapter 17A - 17C sind so konfiguriert, dass diese jeweils zur Querschnittsgeometrie der Querblattfedern 1A - 1F im Längenabschnitt der Lageranbindung passen. Die Adapter 17A - 17F können auf einfache Weise durch die federklemmende Verbindung von Adapteroberteil 20 und Adapterunterteil 21 über die Koppelelemente 22, 23 montiert werden. Die Verbindung zwischen den Adaptern 17A - 17C und den Dämpferkörpern 12, 13 erfolgt über die Verbindungsmittel 19. Die Adapter 17D - 17F sind mit den Dämpferkörpern 12, 13 stoffschlüssig durch Vulkanisation verbunden. Vormontiert zusammen mit den Dämpferkörpern 12, 13 wird die Einheit aus Querblattfeder 1A - 1F und Adapter 17A - 17F in die Haltebauteile 7 eingegliedert und im Kraftfahrzeug verbaut.

Alle Adapter 17A - 17F weisen eine gleichgestaltete Außenkonfiguration auf, wohingegen jeder einzelne Adapter 17A - 17F eine auf die Querschnittsgeometrie eines bestimmten Typs der Querblattfeder 1A - 1F abgestimmten Innenraum 18A - 18C bzw. 18D - 18F besitzt.

### Bezugszeichen:

1 - Querblattfeder
1A- Querblattfeder
1B - Querblattfeder
1C - Querblattfeder
1 D - Querblattfeder
1E - Querblattfeder
1F - Querblattfeder
2 - Mittelbereich
3 - Endbereich
4 - Lagereinheit
5 - freies Ende
6 - Lager
7 - Haltebauteil
8 - Boden
9 - Seitenschenkel
10 - Flanschabschnitt
11 - Bohrung
12 - Dämpferkörper
13 - Dämpferkörper
14 - Stützplatte
15 - Stützplatte
16 - Klemmteil
17A - Adapter
17B - Adapter
17C - Adapter
17D - Adapter
17E - Adapter
17F - Adapter
18A - Innenraum
18B - Innenraum
18C - Innenraum
18D - Innenraum
18E - Innenraum
18F - Innenraum
19 - Verbindungsmittel
20 - Adapteroberteil
21 - Adapterunterteil
22 - Rastkörper
23 - Rastkörper
24 - Hinterschneidung
25 - Widerlagerfläche
26 - Clip- bzw. Rastkörper
27 - Hinterschneidung
28 - Widerlager
29 - Innenwandbereich
30 - Seitenwandbereich
31 - Aufnahmefläche
32 - Anlagefläche
33 - Zapfen
34 - Zapfen
35- Durchbrechung

## Patentansprüche

1. Querblattfedersystem für ein Kraftfahrzeug mit einer quer zum Kraftfahrzeug angeordneten Querblattfeder (1, 1A-1C), welche über mindestens eine Lagereinheit (4) mit dem Kraftfahrzeugaufbau verbunden ist, wobei die Lagereinheit (4) ein Haltebauteil (7) aufweist und die Querblattfeder (1, 1A - C) im Haltebauteil (7) zwischen elastischen Dämpferkörpern (12, 13) angeordnet ist, wobei die Querblattfeder (1, 1A - 1C) im Haltebauteil (7) unter Eingliederung eines Adapters (17A-17C) aufgenommen ist, wobei der Adapter (17A - 17C) einen auf die Querschnittsgeometrie der Querblattfeder (1, 1A - C) angepassten Innenraum (18A - 18C) aufweist, **dadurch gekennzeichnet, dass** der Adapter (17A-17C) Verbindungsmittel (19) zur Koppelung mit den Dämpferkörpern (12, 13) besitzt und die Verbindungsmittel (19) des Adapters (17A - 17C) zur Koppelung mit den Dämpferkörpern (12, 13) mit Widerlagern (28) am Dämpferkörper (12,13) zusammenwirken.

2. Querblattfedersystem für ein Kraftfahrzeug mit einer quer zum Kraftfahrzeug angeordneten Querblattfeder (1, 1A-1F), welche über mindestens eine Lagereinheit (4) mit dem Kraftfahrzeugaufbau verbunden ist, wobei die Lagereinheit (4) ein Haltebauteil (7) aufweist und die Querblattfeder (1, 1A-1F) im Haltebauteil (7) zwischen elastischen Dämpferkörpern (12, 13) angeordnet ist, **gekennzeichnet durch** einen Satz von Querblattfedern (1, 1A- F) und einen Satz von Adaptern (17A- 17F), wobei die einzelnen Querblattfedern (1, 1A - F) zumindest in einem Längenabschnitt jeweils eine voneinander verschiedene Querschnittsgeometrie besitzen und die Adapter (17A - 17F) so konfiguriert sind, dass jeweils ein Adapter (17A - 17F) zu einer Querblattfeder (1, 1A-1F) passt und die Querblattfeder (1, 1A-1F) zusammen mit dem Adapter (17A - 17F) in die Lagereinheit (4) einbaubar ist, wobei alle Adapter (17A-17F) eine gleich gestaltete Außenkonfiguration besitzen und jeder einzelne Adapter (17A - 17F) einen auf die Querschnittsgeometrie eines bestimmten Typs einer Querblattfeder (1,1A-1F) abgestimmten Innenraum (18A - 18F) besitzt.

3. Querblattfedersystem nach Anspruch 1 oder 2, **dadurch gekennzeichnet, dass** der Adapter (17A-17F) zwei miteinander verbindbare Adapterteile (20,21), insbesondere ein Adapteroberteil und ein Adapterunterteil, umfasst.

4. Querblattfedersystem nach Anspruch 3, **dadurch gekennzeichnet, dass** die beiden Adapterteile (20,21) über kraft- und/oder formschlüssige Koppelelemente (22, 23) miteinander verbindbar sind.

5. Querblattfedersystem nach wenigstens einem der Ansprüche 1 bis 4, **dadurch gekennzeichnet, dass** der Adapter (17D-17F) oder die Adapterteile (20, 21) stoffschlüssig mit den Dämpferkörpern (12, 13) gefügt sind, insbesondere anvulkanisiert sind.

6. Querblattfedersystem nach wenigstens einem der Ansprüche 1 bis 5, **dadurch gekennzeichnet, dass** in die Dämpferkörper (12, 13) Stützplatten (14,15) integriert sind und die Verbindungsmittel (19) mit freien Enden der Stützplatten (14, 15) koppelnd zusammenwirken.

7. Querblattfedersystem nach wenigstens einem der Ansprüche 1 bis 6, **dadurch gekennzeichnet, dass** der Adapter (17A - 17F) geometrisch auf Innenwandbereiche (29) des Haltebauteils (7) abgestimmte Seitenwandbereiche (30) aufweist.

8. Querblattfedersystem nach wenigstens einem der Ansprüche 1 bis 7, **dadurch gekennzeichnet, dass** der Adapter (17A - 17F) geometrisch auf Anlageflächen (32) des Dämpferkörpers (12, 13) abgestimmte Aufnahmeflächen (31) aufweist.

## Claims

1. Transverse leaf spring system for a motor vehicle, comprising a transverse leaf spring (1, 1A-1C) which is arranged transversely to the motor vehicle and is connected to the motor vehicle body by means of at least one a bearing unit (4), said bearing unit (4) comprising a holder (4) and the transverse leaf spring (1, 1A-C) being arranged in the holder (4) between resilient dampers (12, 13), the transverse leaf spring (1, 1 A-1 C) being accommodated in the holder (7) by incorporating an adapter (17A-17C), the adapter (17A-17C) having an internal space (18A-18C) matching the cross-sectional geometry of the transverse leaf spring (1, 1A-C), **characterised in that** the adapter (17A-17C) has connecting means (19) for connecting to the dampers (12, 13) and the connecting means (19) of the adapter (17A-17C) interact for connecting to the dampers (12, 13) using abutments (28) on the damper (12, 13).

2. Transverse leaf spring system for a motor vehicle having a transverse leaf spring (1, 1A-1F) which is arranged transversely to the motor vehicle and is connected to the motor vehicle body by means of at least one bearing unit (4), said bearing unit (4) comprising a holder (7) and the transverse leaf spring (1, 1A-1 F) being arranged in the holder (7) between resilient dampers (12, 13), **characterised by** a set of transverse leaf springs (1, 1A-F) and a set of adapters (17A-17F), each of the individual transverse leaf springs (1, 1A-F) having a different cross-sectional geometry at least in a longitudinal portion and the adapters (17A-17F) being configured such that one adapter (17A-17F) is suitable for each transverse leaf spring (1, 1A-1F), and the transverse leaf spring (1, 1A-1 F) being able to be mounted in the bearing unit (4) together with the adapter (17A-17F), all of the adapters (17A-17F) having the same external configuration and each individual adapter (17A-17F) having an internal space (18A-18F) which matches the cross-sectional geometry of a certain type of transverse leaf spring (1, 1 A-1 F).

3. Transverse leaf spring system according to either claim 1 or claim 2, **characterised in that** the adapter (17A-17F) comprises two adapter parts (20, 21) which can be interconnected, more particularly an upper adapter part and a lower adapter part.

4. Transverse leaf spring system according to claim 3, **characterised in that** the two adapter parts (20, 21) can be interconnected via force-locking and/or form-locking coupling elements (22, 23).

5. Transverse leaf spring system according to at least one of claims 1 to 4, **characterised in that** the adapter (17D-17F) or the adapter parts (20, 21) are integrally bonded to the dampers (12, 13), more particularly are vulcanised onto said dampers.

6. Transverse leaf spring system according to at least one of claims 1 to 5, **characterised in that** support plates (14, 15) are integrated in the dampers (12, 13) and the connecting means (19) interact with free ends of the support plates (14, 15) in a coupling manner.

7. Transverse leaf spring system according to at least one of claims 1 to 6, **characterised in that** the adapter (17A-17F) comprises sidewall regions (30) which match the geometry of inner wall regions (29) of the holder (7).

8. Transverse leaf spring system according to at least one of claims 1 to 7, **characterised in that** the adapter (17A-17F) comprises receiving surfaces (31) which match the geometry of the contact surfaces (32) of the damper (12, 13).

## Revendications

1. Système à ressort à lame transversale pour un véhicule à moteur comprenant un ressort à lame transversale (1,1A à 1C) aménagé transversalement au véhicule à moteur, qui est relié via au moins une unité de support (4) à la structure du véhicule à moteur, dans lequel l'unité de support (4) présente un composant de support (7) et le ressort à lame transversale (1, 1A à C) est aménagé dans le composant de support (7) entre des corps d'amortissement élastiques (12, 13), dans lequel le ressort à lame transversale (1, 1 A à 1C) est reçu dans le composant de support (7) par le biais d'une articulation avec un adaptateur (17A à 17C), dans lequel l'adaptateur (17A à 17C) présente un espace interne (18A à 18C) adapté à la géométrie en section transversale du ressort à lame transversale (1, 1A à C), **caractérisé en ce que** l'adaptateur (17A à 17C) possède des moyens de fixation (19) pour se coupler aux corps d'amortissement (12, 13) et les moyens de fixation (19) de l'adaptateur (17A à 17C) coopèrent pour se coupler aux corps d'amortissement (12, 13) avec des butées (28) sur le corps d'amortissement (12, 13).

2. Système à ressort à lame transversale pour un véhicule à moteur comprenant un ressort à lame transversale (1, 1A à 1F) aménagé transversalement au véhicule à moteur, qui est relié via au moins une unité de support (4) à la structure du véhicule à moteur, dans lequel l'unité de support (4) présente un composant de support (7) et le ressort à lame transversale (1, 1A à 1F) est aménagé dans le composant de support (7) entre des corps d'amortissement élastiques (12, 13), **caractérisé par** un jeu de ressorts à lame transversale (1, 1A à F) et un jeu d'adaptateurs (17A à 17F), dans lequel les ressorts à lame transversale individuels (1, 1A à F) possèdent au moins dans une section longitudinale respectivement une géométrie en section transversale différente entre eux et les adaptateurs (17A à 17F) sont configurés de sorte que respectivement un adaptateur (17A à 17F) s'adapte à un ressort à lame transversale (1, 1A à 1F) et que le ressort à lame transversale (1, 1A à 1F) puisse être incorporé, conjointement avec l'adaptateur (17A à 17F), à l'unité de support (4), dans lequel tous les adaptateurs (17A à 17F) possèdent une configuration externe de forme similaire et chaque adaptateur individuel (17A à 17F) possède un espace interne (18A à 18F) qui s'accorde à la géométrie en section transversale d'un type déterminé de ressort à lame transversale (1, 1Aà 1F).

3. Système de ressort à lame transversale selon la revendication 1 ou la revendication 2, **caractérisé en ce que** l'adaptateur (17A à 17F) comprend deux parties d'adaptateur (20, 21) reliables l'une à l'autre, en particulier une partie supérieure d'adaptateur et une partie inférieure d'adaptateur.

4. Système de ressort à lame transversale selon la revendication 3, **caractérisé en ce que** les deux parties d'adaptateur (20,21) peuvent être reliées l'une à l'autre via des éléments de couplage actifs et/ou mécaniques (22, 23).

5. Système de ressort à lame transversale selon au moins l'une des revendications 1 à 4, **caractérisé en ce que** l'adaptateur (17D à 17F) ou les parties d'adaptateur (20, 21) est ou sont venues de matière avec les corps d'amortissement (12, 13), en particulier est ou sont vulcanisées.

6. Système de ressort à lame transversale selon au moins l'une des revendications 1 à 5, **caractérisé en ce que** des plaques d'appui (14, 15) sont intégrées aux corps d'amortissement (12, 13) et les moyens de liaison (19) coopèrent par couplage avec les extrémités libres des plaques d'appui (14, 15).

7. Système de ressort à lame transversale selon au moins l'une des revendications 1 à 6, **caractérisé en ce que** l'adaptateur (17A à 17F) présente des zones de parois latérales (30) qui s'accordent géométriquement aux zones de parois internes (29) du composant de support (7).

8. Système de ressort à lame transversale selon au moins l'une des revendications 1 à 7, **caractérisé en ce que** l'adaptateur (17A à 17F) présente des surfaces réceptrices (31) qui s'accordent géométriquement à des surfaces d'appui (32) du corps d'amortissement (12,13).
